Europäisches Patentamt

European Patent Office

Office européen des brevets

(11) Veröffentlichungsnummer: **0 210 429**
A2

## (12) EUROPÄISCHE PATENTANMELDUNG

(21) Anmeldenummer: 86108511.6

(22) Anmeldetag: 23.06.86

(51) Int. Cl.⁴: **C 09 D 3/72**
C 09 D 3/80, C 08 G 18/62
C 08 F 220/28

(30) Priorität: 03.07.85 DE 3523702
31.01.86 DE 3602890

(43) Veröffentlichungstag der Anmeldung:
04.02.87 Patentblatt 87/6

(84) Benannte Vertragsstaaten:
AT BE CH DE FR GB IT LI NL SE

(71) Anmelder: BAYER AG
Konzernverwaltung RP Patentabteilung
D-5090 Leverkusen 1 Bayerwerk(DE)

(72) Erfinder: Höhlein, Peter, Dr.
Windmühlenweg 3e
D-4152 Kempen 3(DE)

(72) Erfinder: Schönfelder, Manfred, Dr.
Höhenstrasse 126
D-5090 Leverkusen 3(DE)

(54) Bindemittelkombinationen für die Kunststofflackierung.

(57) Die Erfindung betrifft ein Verfahren zur Herstellung von Überzügen auf Oberflächen auf Metall und Kunststoff, die durch Kombination von OH-funktionellen Polyacrylatharzen und Polyisocyanaten zu Beschichtungen ausgehärtet werden können, die neben hervorragender Filmoptik und Chemikalienfestigkeit ein so hohes Elastizitätsniveau aufweisen, das ihren Einsatz z.B. u.a. im Automobilsektor an Teilen ermöglicht, die einer hohen Stoß- und Biegebeanspruchung ausgesetzt sind.

0210429

BAYER AKTIENGESELLSCHAFT  5090 Leverkusen, Bayerwerk
Konzernverwaltung RP
Patentabteilung  Eck/li-c

## Bindemittelkombinationen für die Kunststofflackierung

Die Erfindung betrifft ein Verfahren zur Herstellung von Überzügen auf Oberflächen auf Metall und Kunststoff, die durch Kombination von OH-funktionellen Polyacrylatharzen und Polyisocyanaten zu Beschichtungen ausgehärtet werden können, die neben hervorragender Filmoptik und Chemikalienfestigkeit ein so hohes Elastizitätsniveau aufweisen, das ihren Einsatz z.B. u.a. im Automobilsektor an Teilen ermöglicht, die einer hohen Stoß- und Biegebeanspruchung ausgesetzt sind.

Es ist bekannt, mit Hilfe von Lackierungen die Eigenschaften von Kunststoffen so zu verbessern, daß sie für ein spezielles Einsatzgebiet verwendet werden können. Will man Kunststoffteile z.B. im Automobilbereich an Stellen einsetzen, die der Bewitterung, der Stoßbeanspruchung und der Belastung durch Umwelteinflüsse besonders ausgesetzt sind, wie es z. B. im Bereich der unteren Seitenteile (Schweller), der Vorder- und Hinterteile der Fall ist, so müssen diese Teile mit Überzügen versehen werden, die eine Summe von Anforderungen erfüllen müssen. Erwähnt seien hier auch z.B. zu beschichtende Haushaltsgeräte wie Waschmaschinen, Spülmaschinen etc.

Le A 23 915-Ausland

Infolge der hohen mechanischen Beanspruchung, die z.B. den Überzügen im Automobilsektor insbesondere im sogenannten Bumper-Bereich zugemutet werden, müssen neben extrem hoher Flexibilität auch ausreichende Oberflächenhärten erreicht werden.

Die dem Straßenschmutz besonders ausgesetzten Kunststoffoberflächen (Schweller) müssen hingegen durch Überzüge geschützt werden, die neben den mechanischen Anforderungen (Steinschlagfestigkeit) eine hohe Widerstandsfähigkeit gegen Salz, Teer- und Ölflecken aufweisen. Allen Überzügen gemeinsam obliegt die Aufgabe, eine gute Filmoptik zu erzielen, die neben hohen Glanzgraden auch die Konservierung dieser optischen Eigenschaften über einen Zeitraum von vielen Jahren trotz Bewitterungseinflüssen gewährleistet.

Zur Beschichtung von Kunststoffen werden eine Vielzahl von Bindemittelsystemen verwendet. So werden in der DE-OS 23 64 736 zur Beschichtung von Kautschukerzeugnissen Lacke beschrieben, die aus einem Acryllack auf Basis von Styrol, Alkyl(meth)-acrylsäureestern und Hydroxyalkyl(meth)acrylsäureestern aufgebaut sind und durch Kombination mit alkylierten Melamin-Formaldehydharzen bzw. Polyisocyanaten ausgehärtet werden. Die entstandenen hochflexiblen Überzüge werden allerdings mit einer Reihe von Nachteilen erkauft. Die die mechanischen Eigenschaften bewirkende Grundeigenschaft, die Haftung des Überzuges auf der Kunststoffoberfläche, wird dadurch erreicht, daß die Kautschukoberfläche vor Beschichtung oberflächenaktiviert und hernach mit zwei Acrylharzlacken grundiert worden ist.

Le A 23 915

Eine zusätzliche Beschränkung ist durch die Auswahl des Substrates gegeben. Die Überzüge zeigen ihre besonderen Eigenschaften nur auf vorbehandelten Kautschukoberflächen wie einem Ethylen-Propylen-Copolymerisatkautschuk, einem Styrol-Butadien-Copolymerisatkautschuk, einem Polybutadienkautschuk, einem Polyisoprenkautschuk oder einem Butylkautschuk.

In der DE-OS 27 56 708 werden Folien auf Polyacrylatbasis beschrieben, die in der Lage sind, mit einem reaktiven Lacksystem auf Polyol/Polyisocyanatbasis ohne Haftungsprobleme und ohne weitere Vorbehandlung beschichtet werden zu können. Die Beseitigung der Haftungsschwierigkeiten wird dadurch erzielt, daß den Copolymerisaten Monomere mit funktionellen Endgruppen in Mengen von 1 bis 15 Gew.-% zugesetzt werden, die einen Verbund mit dem reaktiven Lacksystem auf Isocyanatbasis eingehen können. Dieses Verfahren hat trotz des Wegfalls einer besonderen Vorbehandlung der Substratoberfläche den Nachteil, daß es nur für den Spezialfall des Folienmaterials auf (Meth)Acrylatcopolymere anwendbar ist und Substratoberflächen auf anderer Polymerbasis in dieser Weise nicht beschichtet werden können.

Es wurde nun gefunden, daß Bindemittelkombinationen aus OH-funktionellen Copolymerisatharzen bestimmter Zusammensetzung und Polyisocyanaten nach Aushärtung auf nicht weiter vorbehandelten Oberflächen, vorzugsweise Kunststoffoberflächen, gut haftende Filme ergeben, deren Eigenschaftsprofil wie Elastizität, Härte, Chemikalienfestigkeit und Wetterbeständigkeit den Einsatz z.B. in der Automobilbau-Gemischbauweise gestatten, ebenso bei Fenstern, Haushaltsgeräten etc.

Gegenstand der Erfindung sind Bindemittelkombinationen aus

A)    99 - 10 Gew.-Tln., vorzugsweise 90 - 30 Gew.-Tln. OH-funktioneller Copolymerisatharze, welche pro Molekül mindestens zwei funktionelle OH-Gruppen enthalten, hergestellt durch Copolymerisation aus

a)    0 - 26,5 Gew.-Tln. mindestens eines ungesättigten aromatischen Monomeren wie Styrol, Vinyltoluol und/oder Methacrylsäureester mit aliphatischen Kohlenwasserstoffresten der Kettenlänge $C_1$ bis $C_6$, vorzugsweise Methylmethacrylat,

b)    40 - 65    Gew.-Tln. mindestens eines aliphatischen Acrylsäureesters mit 1 - 12 C-Atomen in der Alkoholkomponente, vorzugsweise Butylacrylat,

c)    25 - 40    Gew.-Tln. mindestens eines Hydroxyalkylesters der Acrylsäure mit 2 - 8 C-Atomen im Hydroxyalkylrest,

d)    0 - 50    Gew.-Tln. mindestens eines Acryl- bzw. Methacrylsäureglycidylesters bzw. deren Umsetzungsprodukten mit aliphatischen und/oder aromatischen Monocarbonsäuren und Aminoverbindungen,

<u>Le A 23 915</u>

e)  0 - 40  Gew.-Tln. eines Acrylsäure- bzw. Methacrylsäureamides mit 1 - 20 C-Atomen im Amidorest, wobei besonders alkoxylierte Hydroxy-
methylacryl- (oder -methacryl-)säureamide
zu nennen sind, welche auch in situ erzeugt
werden können,

f)  0 - 60  Gew.-Tle. Acrylnitril,

g)  0,05 - 5  Gew.-Tle. mindestens einer α, β-monoolefi-
nisch ungesättigten Mono- oder Dicarbonsäure mit 3 - 7 C-Atomen und/oder mindestens
eines Maleinsäurehalbesters bzw. Fumarsäurehalbesters mit 2 - 14 C-Atomen im Alkoholrest, vorzugsweise Acrylsäure und

B)  1 - 90 Gew.-Tle., vorzugsweise 5 - 45 Gew.-Tle. eines
polyfunktionellen Isocyanates, vorzugsweise oligomere
Isocyanate mit Biuret-, Allophanat-, Urethan- und/oder
Isocyanuratstruktur,

wobei jeweils die Summe der Gew.-Tle. der Komponenten A)
und B) und die Summe der Gew.-Tle. der Komponenten a) bis
g) 100 beträgt.

Die Herstellung der Polyacrylatharze A kann durch Copolymerisation der Bestandteile a - g nach üblichen Verfahren
erfolgen, wobei der radikalischen Polymerisation in Masse
bzw. in Lösung der Vorzug gegeben wird. Dabei werden bei

Le A 23 915

Temperaturen von 70 - 160°C, vorzugsweise 100 - 160°C, in Gegenwart von Radikalbildnern und gegebenenfalls Reglern monomere Bausteine copolymerisiert.

Bevorzugte Ausgangsverbindungen für die Polyacrylatharze A bestehen aus

a)    0 - 26,5 Gew.-Tle. Styrol, Vinyltoluol, Methylmethacrylat, Butylmethacrylat oder deren
              Mischungen,

b)    45 - 63   Gew.-Tle. Ethylacrylat, Butylacrylat,
              2-Ethylhexylacrylat oder deren Mischungen,

c)    25 - 39   Gew.-Tle. 2-Hydroxyethylacrylat, 2-Hydroxypropylacrylat, 4-Hydroxybutylacrylat oder
              deren Mischungen,

d)    0 - 30   Gew.-Tle. Glycidylacrylat, Glycidylmethacrylat oder deren Mischungen, gegebenenfalls
              nach Umsetzung mit gesättigten und/oder un-
              gesättigten aliphatischen und/oder aromati-
              schen Monocarbonsäuren, wobei die Umsetzung
              vor, vorzugsweise nach der Copolymerisation,
              bei Temperaturen von 80 - 160°C unter Verwendung üblicher Katalysatoren durchgeführt
              wird,

e)    0 - 30   Gew.-Tle. Methoxymethylacrylsäureamid bzw.
              Methoxymethylmethacrylsäureamid oder Mischungen derselben, wobei die alkoxylierten

Le A 23 915

Monomeren gegebenenfalls copolymerisiert werden können, oder nach Copolymerisation von Acrylsäure- bzw. Methacrylsäureamid oder Mischungen derselben die Herstellung der alkoxylierten Verbindungen gegebenenfalls durch Umsetzung mit Formaldehyd in Gegenwart von Methanol vorgenommen werden kann,

f)    0 - 45    Gew.-Tle. Acrylnitril,

g)    0,5 - 4    Gew.-Tle. Acrylsäure, Methacrylsäure oder Maleinsäurehalbester mit 4 - 8 C-Atomen in der Alkoholkomponente oder deren Mischungen.

Die Monomeren a - g werden im wesentlichen in den gleichen Verhältnissen, wie sie zur Polymerisation eingesetzt werden, in das Copolymerisat eingebaut. Die einpolymerisierten Einheiten können im wesentlichen statistisch verteilt sein.

Als Lösungsmittel kommen beispielsweise Aromaten wie Benzol, Toluol, Xylol, Chlorbenzol, Ester wie Ethylacetat, Butylacetat, Methylglykolacetat, Ethylglykolacetat, Ether wie Butylglykol, Tetrahydrofuran, Dioxan, Ethylglykolether, Ketone wie Aceton, Methylethylketon, halogenhaltige Lösungsmittel wie Methylenchlorid oder Trichlormonofluorethan in Betracht.

Die Herstellung der Polyacrylatharze kann entweder kontinuierlich oder diskontinuierlich durchgeführt werden. Vor-

Le A 23 915

zugsweise wird man in einem Polymerisationsreaktor gleichmäßig und kontinuierlich die Monomermischung und den Initiator eindosieren und gleichzeitig die entsprechende Menge Polymerisat kontinuierlich abführen.

Vorzugsweise können so chemisch einheitliche Copolymere hergestellt werden. Chemisch nahezu einheitliche Copolymerisate können auch hergestellt werden, wenn man die Reaktionsmischung mit konstanter Geschwindigkeit in einen Rührkessel einlaufen läßt, ohne das Polymerisat abzuführen.

Geeignete Initiatoren zur Herstellung der Polyacrylatharze sind solche Verbindungen, deren Halbwertszeiten des Radikalzerfalls bei 70 - 160°C von 0,01 bis 400 Minuten liegen.

Im allgemeinen erfolgt die Copolymerisationsreaktion im Temperaturbereich von 70 bis 160°C, vorzugsweise von 100 bis 160°C, unter einem Druck von $10^3$ bis $2 \cdot 10^4$ mbar. Die Initiatoren werden in Mengen von 0,05 bis 15 Gew.-%, bezogen auf die Gesamtmenge an Monomeren, eingesetzt. Im allgemeinen wird die Polymerisation bis zu einem Umsatz von 98 % der eingesetzten Monomeren gebracht, kann aber auch vorher abgebrochen werden.

Geeignete Initiatoren zur Durchführung des erfindungsgemäßen Verfahrens sind solche Verbindungen, die thermisch in Radikale zerfallen, z. B. aliphatische Azoverbindungen wie Azoisobuttersäurenitril, Azo-bis-2- methylvalero-

Le A 23 915

nitril, 1,1'-Azo-bis-1-cyclohexannitril und 2,2'-Azo-bis-isobuttersäurealkylester; symmetrische Diacylperoxide wie z. B. mit Acetyl-, Propionyl- oder Butyrylperoxid, Brom-, Nitro-, Methyl- oder Methoxyl-Gruppen substituierte Benzoylperoxide sowie Lauroylperoxid; symmetrische Peroxydicarbonate wie z. B. Diethyl-, Diisopropyl-, Dicyclohexyl- sowie Dibenzoylperoxidcarbonat; tert.-Butylper-octoat oder tert.-Butylphenylperacetat sowie Peroxycarbamate wie tert.-Butyl-N-(phenylperoxy)- carbamat oder tert.-Butyl-N-(2-, 3- oder 4-chlor-phenylperoxy)-carbamat. Weiterhin geeignet sind z. B. tert.-Butylhydroperoxid, Di-tert.-butylperoxid, Cumolhydroperoxid oder Di-cumylperoxid.

Zur Regelung des Molekulargewichtes des Acrylatharzes können übliche Regler eingesetzt werden, z. B. n-Dodecylmercaptan, Diisopropylxanthogendisulfid, Di(methylentri-methylolpropan)xanthogendisulfid und Thioglykol. Bevorzugt ist Thioglykol. Die Regler werden in Mengen von 0,1 bis 10 Gew.-%, bezogen auf das Monomerengemisch, zugegeben.

Die Monomeren werden im allgemeinen in den gleichen Verhältnissen wie zur Polymerisation eingesetzt, in das Copolymerisat eingebaut, wobei die einpolymerisierten Einheiten im allgemeinen statistisch verteilt sind. Die Carboxylgruppen enthaltenden Acrylatpolymerisate besitzen mittlere Molgewichte $M_{GPC}$ von etwa 1000 bis 60.000, vorzugsweise 2000 bis 50.000, und ihre Lösungen in Xylol und/oder Butylacetat besitzen bei $20°C$ eine Viskosität von ca. 10 bis 100.000 mPa.s. Dies kann von der Konzentration

Le A 23 915

und zugesetzter Reglermenge abhängig sein. Ferner besitzen die Hydroxylgruppen enthaltenden Acrylatpolymerisate molekulare Uneinheitlichkeiten U von 0,5 - 10, vorzugsweise 0,5 - 5.

Die molekulare Uneinheitlichkeit U (= Heterogenitätsfaktor U) kann durch die Gleichung definiert werden:

$$U = (M_w/M_n) - 1$$

wobei

$M_w$= Gewichtsmittel und

$M_n$= Zahlenmittel des Molekulargewichtes sind.

Die mittleren Molekulargewichte und die molekularen Uneinheitlichkeiten der Copolymerisatharze wurden mit Hilfe der Gelpermeationschromatographie (GPC) an Styragelen mit Tetrahydrofuran als Elutionsmittel bestimmt. Dabei werden nach Erstellung einer universellen Eichbeziehung (nach Z. Grubisic, P. Rempp und H. Benoit, J. Polymer Sci. Part B. Polymer Letters 5 (1967) 745) aus der Verteilung der Chromatogramme die Molekulargewichtsmittelwerte $M_w$ und $M_n$ bestimmt.

Es ist bekannt, daß Produkte mit gleichem mittlerem Molekulargewicht (Zahlenmittel $M_n$), aber verschiedener molekularer Uneinheitlichkeit unterschiedliche Lösungsviskositäten besitzen. Das Produkt mit der größeren Uneinheitlichkeit besitzt immer eine größere Lösungsviskosität, da

Le A 23 915

hochmolekulare Anteile einen wesentlich größeren Beitrag zur Viskosität liefern als die gleiche Menge niedermolekularer Anteile. Eine breite Molekulargewichtsverteilung bedeutet außerdem, daß die Anzahl der Reaktivgruppen pro Molekül und damit die Reaktivität der einzelnen Ketten große Unterschiede aufweist.

Die Carboxylgruppen enthaltenden Monomeren der Gruppe A.g. können vor, während oder nach der Polymerisation mit Epoxiden wie Ethylenoxid, Propylenoxid und Glycid und mit Glycidylestern von Monocarbonsäuren mit 8 - 20 C-Atomen, vorzugsweise 10 - 16 C-Atomen umgesetzt werden.

Die Glycidylverbindungen der Gruppe A.d. erlauben über die chemisch reaktive Epoxidgruppierung die Vernetzung mit carboxylgruppenhaltigen Verbindungen und dienen der Modifizierung des Polyacrylatharzes durch die Addition von Fettsäuren, wobei im Falle von ungesättigten Fettsäuren lufttrocknende Polyacrylatharze zugänglich sind.

Die Copolymerisate können im Anschluß an ihre Herstellung nach einer evtl. vorgenommenen Modifizierung bei Temperaturen von 100 - 200° C von flüchtigen Bestandteilen befreit werden. Dies kann z. B. entweder unter Normaldruck in Schlangenrohrverdampfern durch Einblasen eines Inertgases, wie Stickstoff oder Wasserstoff, in Mengen von 0,1 bis 1 $m^3$ auf 1 kg Harzschmelze oder im Vakuum in Ausdampfapparaturen, wie Fallfilmverdampfern, Dünnschichtverdampfern, Schneckenverdampfern, Entspannungsverdampfern oder Sprühverdampfern erfolgen.

Le A 23 915

- 12 -

0210429

Wird die Lösung polymerisiert, so können inerte Lösungsmittel, wie z. B. Ethanol, Propanol, Isopropanol, n- oder Iso-butanol, Methylethylketon, Toluol, Xylol, Essigsäurebutylester oder Butylglykol verwendet werden. Die Herstellung der erfindungsgemäßen Polymerisatharze kann auch nach dem bekannten Prinzip der Emulsionspolymerisation erfolgen. Prinzipiell ist es auch möglich, die Polymerisationsreaktion in Gegenwart sogenannter Reaktivverdünner durchzuführen. Hierbei handelt es sich vor allem um mehrwertige Alkohole des Molekulargewichtsbereiches 62 bis 6000, vorzugsweise 62 bis 400, die nach Beendigung der Polymerisationsreaktion im Gemisch mit den Polymerisatharzen vorliegen. Diese flüssigen Gemische können dann unmittelbar als Bindemittelkomponente, beispielsweise in Zweikomponenten- Polyurethanlacken Verwendung finden. Geeignete Reaktivverdünner sind beispielsweise niedermolekulare Polyole wie Ethylenglykol, Propylenglykol, Butylenglykol, 1,6-Dihydroxyhexan, Trimethylolpropan, Diethylenglykol, Triethylenglykol und/oder Tripropylenglykol oder höhermolekulare Polyole der aus der Polyurethanchemie an sich bekannten Art, d. h. Polyesterpolyole auf Basis der genannten einfachen Alkohole und der üblichen, mehrwertigen Carbonsäuren wie Adipinsäure, Phthalsäure, Tetrahydrophthalsäure oder Hexahydrophthalsäure oder schließlich höhermolekulare Polyetherpolyole wie sie durch Alkoxylierung der genannten einfachen, Ethergruppen-freien Polyole unter Verwendung von Ethylenoxid und/oder Propylenoxid in an sich bekannter Weise zugänglich sind.

Le A 23 915

Weiterhin ist es möglich, die erfindungsgemäßen Polymerisatharze im Anschluß an ihre Herstellung beispielsweise durch Umsetzung mit Epoxiden wie z. B. Glycid oder Glycidestern, mit Carbonsäureanhydriden wie Phthalsäureanhydrid, mit Carbonsäuren wie Benzoesäure, Ethylhexansäure, Fettsäuren oder Ölsäuren zu modifizieren, um hierdurch gewisse Eigenschaften der Polyole wie z. B. die Pigmentverträglichkeit oder der letztlich erhaltenen Überzüge wie z. B. deren Haftung und Alkalibeständigkeit zu verbessern.

Die erfindungsgemäßen Polymerisatharze stellen wertvolle Bindemittelkomponenten für Zweikomponenten-Lacke dar. Unter "Zweikomponenten-Lacken" sind in diesem Zusammenhang sowohl "Eintopf-Systeme" als auch "Zweitopf-Systeme" zu verstehen. Der Umstand, daß es sich bei den erfindungsgemäßen Polymerisatharzen um Bindemittelkomponenten für Zweikomponenten-Lacke handelt, besagt, daß in den Lacken neben den erfindungsgemäßen Polymerisatharzen (und gegebenenfalls weiteren Polyhydroxylverbindungen) eine Härterkomponente vorliegt. Falls es sich bei diesem Härter beispielsweise um ein Polyisocyanat mit freien Isocyanatgruppen handelt, können die gebrauchsfertigen Beschichtungsmittel erst kurz vor ihrer Verarbeitung durch Abmischen der Komponenten hergestellt werden. In einem solchen Fall würde es sich um ein "Zweitopf-System" handeln. Falls es sich jedoch bei dem Härter um eine Verbindung handelt, die mit den erfindungsgemäßen Polymerisatharzen erst bei erhöhter Temperatur reagiert, beispielsweise um Polyisocyanate mit blockierten Isocyanatgruppen, kann der Härter auch

Le A 23 915

bereits bei Raumtemperatur mit dem Polymerisatharz zu einem bei Raumtemperatur lagerfähigen "Eintopf-System" vereinigt werden.

Bei der erfindungsgemäßen Verwendung der erfindungsgemäßen Polymerisatharze können diese in Abmischung mit bis zu 90 Gew.-%, vorzugsweise bis zu 40 Gew.-%, bezogen auf Gesamtgemisch, an anderen Verbindungen mit aktiven Wasserstoffatomen zum Einsatz gelangen.

Hierbei handelt es sich beispielsweise um die bereits oben beispielhaft genannten "Reaktivverdünner", d. h. um Polyhydroxylverbindungen, die bereits bei der Herstellung der Polymerisatharze mitverwendet wurden oder aber auch nachträglich mit den Polymerisatharzen abgemischt werden, maximal bis zu einer Menge von bis zu 35 OH-Äquivalent-% in den Gemischen. Neben den oben bereits beispielhaft genannten höhermolekularen Polyhydroxylverbindungen kommen als Abmischkomponente beispielsweise auch ölmodifizierte Alkydharze oder urethanmodifizierte Polyesterpolyole in Betracht. Geeignete, Hydroxylgruppen aufweisende Abmischkomponenten für die erfindungsgemäßen Polymerisatharze, insbesondere solche auf Polyester-Basis, sind beispielsweise in den einschlägigen Standardwerken wie

Le A 23 915

1. Temple C. Pattan, Alkyd Resin Technology, Interscience Publishers John Wiley & Sons, New York, London 1962;

2. Dr. Johannes Scheiber, Chemie und Technologie der künstlichen Harze, Wissenschaftliche Verlagsgesellschaft mbH, Stuttgart, 1943;

3. Hans Wagner und Hans-Friedrich Sarx, Lackkunstharze, 4. Auflage, Karl Hanser Verlag, München 1959;

4. Ullmanns Encyclopädie der technischen Chemie, Band 14, Seiten 80 bis 106 (1963)

beschrieben.

Im Falle der bereits erwähnten Herstellung der erfindungsgemäßen Polymerisatharze in Gegenwart von Polyesterpolyolen als Reaktionsmedium ist es bei Verwendung von schwachen Lösungsmitteln bei der Herstellung der Polymerisatharze als zusätzliches Reaktionsmedium wie z. B. Testbenzin und/oder aromatischen Kohlenwasserstofflösungsmitteln, die für das Polyesterpolyol ein Löser, für das Polyhydroxylpolyacrylat jedoch ein Nichtlöser darstellen, möglich, das Polyhydroxylpolyacrylat in Form einer Dispersion von Polymermikroteilchen zu erhalten, die im Polyesterpolyol bzw. seiner Lösung stabil dispergiert sind. Die Verwendung derartiger Dispersionen ist beim erfindungsgemäßen Verfahren insbesondere dann vorteilhaft, wenn die Aushärtung der Lacke unter Hitzeeinwirkung erfolgt. In einem solchen

Le A 23 915

Fall schmelzen die dispergierten Polyhydroxylpolyacrylat-Teilchen vor ihrer Vernetzung unter gleichzeitiger homogener Verteilung im Lackfilm, so daß auch in diesem Fall klare Lackschichten erhalten werden können.

Als Reaktionskomponente B für die erfindungsgemäß hergestellten hydroxylhaltigen Acrylatharze zur Herstellung von Lackbindemitteln für Überzüge und Beschichtungen kommen marktübliche Lack-Polyisocyanate in Frage, deren Herstellung beispielsweise in den folgenden Patentschriften behandelt wird:

US-PS 3 124 605, 3 358 010, 3 903 126, 3 903 127, 3 976 622, 3 183 112, 3 394 111, 3 645 979, 3 919 218, GB-PS 1 060 430, 1 234 972, 1 506 3703 und 1 458 564. Es handelt sich hierbei vorzugsweise um Lackpolyisocyanate, die Biuretgruppen, Urethangruppen, Allophanatgruppen oder Isocyanuratgruppen aufweisen.

Die Biuretgruppen enthaltenden Polyisocyanate stellen vorzugsweise Umsetzungsprodukte aus Alkylendiisocyanaten mit 4 bis 6 C-Atomen in der Alkylengruppe und Wasser dar.

Die Urethangruppen enthaltenden Polyisocyanate sind vorzugsweise aus aliphatischen Tri- und Tetraolen wie z. B. Trimethylolpropan, Glycerin, Pentaerythrit und aromatischen oder cycloaliphatischen Diisocyanaten wie 2,4 und/oder 2,6-Toluylendiisocyanat, 2,4'- und/oder 4,4'-Diisocyanatodicyclohexylmethan, Isophorondiisocyanat usw. aufgebaut, wobei im wesentlichen 1 Hydroxylgruppe des Polyols mit 1 Mol Diisocyanat reagiert hat.

<u>Le A 23 915</u>

Die Isocyanuratgruppen aufweisenden Polyisocyanate stellen Cyclotrimerisationsprodukte der vorgenannten aliphatischen und aromatischen Diisocyanate dar, insbesondere aus Toluylendiisocyanat und Hexamethylendiisocyanat.

Grundsätzlich ist es auch möglich, die Isocyanatkomponente in mit Blockierungsmitteln für Isocyanatgruppen wie z. B. Phenolen, Oximen wie Cyclohexanonoxim, ε-Caprolactam, Malonsäurediethylester oder Acetessigsäureethylester blockierter Form einzusetzen, so daß hitzevernetzbare Einbrennlacke resultieren.

Die Hydroxylgruppen enthaltenden Polyacrylate und Polyisocyanate werden in solchen Mengenverhältnissen eingesetzt, daß auf 1 Hydroxylgruppe 0,5 bis 2, vorzugsweise 0,7 bis 1,3 Isocyanatgruppen entfallen.

Bei der erfindungsgemäßen Verwendung können weiterhin als Vernetzungsmittel verwendet werden:
beispielsweise mit Hydroxylgruppen im Sinne einer Kondensationsreaktion befähigte Aminoplastharze, z. B. entsprechende Melamin-Derivate wie Hexamethoxymethylmelamin oder andere Melamin-Formaldehyd-Kondensationsprodukte, wie sie beispielsweise in FR-PS 943 411 oder von D.H. Salomon in "The Chemistry of Organic Filmformers", Seiten 235-240, John Wiley & Sons, Inc., New York, 1974, beschrieben sind.

Le A 23 915

Ferner können übliche Vernetzungsmittel, die aus der Lacktechnologie bekannt sind, verwendet werden, z. B. mit alkoholischen Hydroxylgruppen im Sinne einer Additions- oder Kondensationsreaktion befähigte Epoxidgruppen aufweisende Verbindung, Phenolplastharze, Resolharze, Harnstoffharze oder Guanidinharze. Beliebige Gemische der beispielhaft genannten Vernetzer können ebenfalls eingesetzt werden.

Die Vernetzungsmittel kommen bei der erfindungsgemäßen Verwendung der erfindungsgemäßen Polymerisatharze bzw. ihrer Abmischungen mit weiteren Verbindungen mit alkoholischen Hydroxylgruppen im allgemeinen in solchen Mengen zum Einsatz, daß für jede alkoholische Hydroxylgruppe 0,8 bis 2,5, vorzugsweise 0,9 bis 1,5 Reaktivgruppen des Venetzungsmittels zur Verfügung stehen.

Bei der erfindungsgemäßen Verwendung können selbstverständlich die üblichen, aus der Lacktechnologie bekannten Hilfs- und Zusatzmittel mitverwendet werden.

Zu den Hilfsmitteln gehören Lösungsmittel wie z. B. Methanol, Ethanol, Isopropanol, Essigsäureethylester, Essigsäurebutylester, Ethylglykolacetat, Ethylenglykolmonoethylether, Methylethylketon, Methylisobutylketon, Cyclohexanon, Toluol, Xylol, Testbenzin oder Gemische derartiger Lösungsmittel. Im Falle des Vorliegens von freien Isocyanatgruppen wird man vorzugsweise auf die Verwendung von Lösungsmitteln mit gegenüber Isocyanatgruppen reaktionsfähi-

Le A 23 915

gen Gruppen verzichten, es sei denn, diese werden nicht als inertes Lösungsmittel, sondern als "Reaktivverdünner" mitverwendet.

Weitere Hilfs- und Zusatzmittel sind z.B. Pigmente, viskositätsregulierende Stoffe, Antischaummittel, Katalysatoren für die NCO/OH-Additionsreaktion, UV-Absorber, Antioxidantien oder sonstige den Polymerabbau verhindernde Substanzen wie z. B. sterisch gehinderte Amine usw.

Die erfindungsgemäß zum Einsatz gelangenden Beschichtungsmittel können je nach Art des eingesetzten Vernetzers innerhalb des Temperaturbereichs von 0 bis 250°C ausgehärtet werden. Erfindungsgemäß zum Einsatz gelangende Beschichtungsmittel, die als Vernetzer Isocyanatgruppen aufweisende Verbindungen aufweisen, können bereits bei Raumtemperatur ausgehärtet werden. Vorzugsweise erfolgt die Aushärtung derartiger Systeme von 0 bis 130°C. Erfindungsgemäß zum Einsatz gelangende Einbrennlacke, die als Vernetzer beispielsweise Polyisocyanate mit blockierten Isocyanatgruppen enthalten, werden im allgemeinen im Temperaturbereich von 60 bis 250°C ausgehärtet. Hierbei ist es manchmal vorteilhaft, die Härtung zunächst bei Temperaturen unter 120°C zu beginnen und bei Temperaturen über 120°C zu vervollständigen.

Die unter erfindungsgemäßer Verwendung der erfindungsgemäßen Polymerisatharze als Bindemittelkomponente hergestellten Überzugsmittel ergeben nach ihrer Härtung Überzüge mit hoher Dehnfähigkeit und Witterungs- und Chemikalienbeständigkeit.

Le A 23 915

Sie sind daher besonders geeignet zur Beschichtung von Gegenständen, die dem Wetter ausgesetzt sind, wie Metallen, z.B. der Metallaußenhaut von Kraftfahrzeugen, Dachrinnen, Geländern, Fahrrädern, Haushaltsgeräten usw.

Wegen der hohen Dehnfähigkeit und der guten Haftungseigenschaften sowie guter Kratzbeständigkeit eignen sie sich auch hervorragend zur Beschichtung von Kunststoffteilen wie z. B. Autokarosserieteilen aus Kunststoff (z. B. Stoßfängerverkleidung, Kotflügel, Motorhauben, Heckklappen, Spoiler), Fensterrahmen und Haushaltsgeräten usw.

Wegen der guten Eigenschaften auf Kunststoffuntergründen einerseits und Metalloberflächen andererseits sind die erfindungsgemäßen Bindemittel vorzüglich geeignet zur gemeinsamen Beschichtung von Kunststoff und Metall nicht nur bei Kraftfahrzeugen in Gemischbauweise bei Temperaturen von 60 - 130°C, vorzugsweise 80 - 100°C.

Selbstverständlich können auch andere Substrate, wie z. B. Holz und mineralische Untergründe mit den erfindungsgemäßen Bindemitteln beschichtet werden.

Die Applikation der Lacke erfolgt nach den üblichen Methoden der Lacktechnologie, beispielsweise durch Spritzen, Gießen, Tauchen oder Walzen. Die Lacke werden im allgemeinen in solchen Mengen aufgetragen, daß Trockenfilmstärken der Lacke zwischen 0,005 und 0,10 mm resultieren.

Le A 23 915

Bei den nachfolgenden Beispielen beziehen sich alle Prozentangaben auf Gewichtsprozente, alle Angaben in "Teilen" beziehen sich auf Gewichtsteile.

<u>Le A 23 915</u>

## Beispiel 1

In einem mit Rückflußkühler, Heiz-, Kühl- und Dosiervorrichtungen versehenen Reaktor werden 2250 Teile Butylacetat und 1500 Teile Xylol vorgelegt und auf 130°C erwärmt. Im Verlauf von 4 Stunden wird unter Stickstoffatmosphäre bei dieser Temperatur eine Mischung aus 5988 Teilen Butylacrylat, 95 Teilen Acrylsäure und 3817 Teilen 2-Hydroxyethylacrylat zudosiert.

Gleichzeitig erfolgt unter getrennter Dosierung die Zugabe von 600 Teilen tert.-Butylperoctoat und 750 Teilen Xylol, welche innerhalb von 5 Stunden gemeinsam zugegeben werden.

Anschließend wird 3 Stunden bei 135°C nachgerührt, auf Rückflußtemperatur erwärmt und das Reaktionsgut ca. 1 Stunde bei dieser Temperatur gehalten. Nach dem Abdrücken über einen Filter resultiert ein Copolymerisatharz mit einer Viskosität von 932 mPasec. (20°C), einen Feststoffgehalt von 69,6 Gew.-%, einer Säurezahl von 7 mg KOH/g Substanz, einer Farbzahl von 90 APHA und einer Hydroxyzahl von 121 mg KOH/g Substanz.

## Beispiel 2

In einem mit Rückflußkühler, Heiz-, Kühl- und Dosiervorrichtungen versehenen Reaktor werden 4500 Teile Xylol vorgelegt und auf 115°C erwärmt. Im Verlauf von 4 Stunden wird unter Stickstoffatmosphäre bei dieser Temperatur eine

Le A 23 915

Mischung aus 1852 Teilen Styrol, 5055 Teilen Butylacrylat, 2451 Teilen 2-Hydroxyethylacrylat und 92 Teilen Acrylsäure zudosiert.

Gleichzeitig erfolgt unter getrennter Dosierung die Zugabe von 375 Teilen tert.-Butylperoctoat und 675 Teilen Xylol, welche innerhalb von 5 Stunden gemeinsam zugegeben werden.

Anschließend wird 3 Stunden bei 115°C nachgerührt, auf Rückflußtemperatur erwärmt und das Reaktionsgut ca. 1 Stunde bei dieser Temperatur gehalten. Nach dem Abdrücken über einen Filter resultiert ein Copolymerisatharz mit einer Viskosität von 2265 mPasec (20°C), einer Säurezahl von 7 mg KOH/g Substanz, einem Feststoffgehalt von 65,0 Gew.-%, einer Hydroxylzahl von 75 mg KOH/g Substanz und einer Farbzahl von 10 APHA.

Der Festgehalt wurde für alle hier beschriebenen Copolymerisatharze bestimmt, indem ca. 0,2 g Harzlösung auf einem Metalldeckelchen von 7,5 cm Durchmesser in einer Schichtdicke von ca. 5 - 10 µm 1 Stunde im Umlufttrockenschrank auf 125°C erhitzt wurde.

Le A 23 915

<u>Prüfergebnisse eines Weißlackes:</u>

|                                                                    | Beispiel 1 | Beispiel 2 |
|--------------------------------------------------------------------|------------|------------|
| (60 % TiO$_2$/35 % BM/ NCO: OH 1,2/0,2 % Zinkoctoat)               |            |            |
| Standzeit bei Raumtemperatur                                       | ca. 20 h   | ca. 5 h    |
| Trocknung (drying time rec.)                                       | ca. 4,5 h  | ca. 3 h    |
| Glanz (60° Gardner)                                                | 92         | 90         |
| Pendelhärte (n. 14 d)                                              | 92         | 112        |
| Anlösbarkeit* (1 Min. Einwirkung) Toluol                           | 1          | 0 - 1      |
| EGA                                                                | 1          | 0 - 1      |
| EA                                                                 | 1 - 2      | 1          |
| Aceton                                                             | 1          | 0 - 1      |
| Teerbeständigkeit* Einwirkung                    1 h               | 0          | 0          |
| DB-Teerlsg.                                      3 h               | 0          | 0          |
|                                                  24 h              | 1          | 1          |
| Dehnung (auf Bayflex 91)                                           | 44 %       | 44 %       |

| *   | 0 = | bestmöglicher Wert |
|-----|-----|--------------------|
|     | 4 = | ungünstigster Wert |
|     | BM = | Bindemittel |
|     | EGA = | Ethylglycolacetat |
|     | EA = | Ethylacetat |
|     | DB-Teerlsg.® = | (Daimler-Benz) |
|     | Bayflex 91® = | (Bayer AG) |
|     | APHA = | Maßeinheit der Farbzahl nach Hazen |

<u>Le A 23 915</u>

Patentansprüche

1)    Bindemittelkombinationen aus

A)    99 - 10 Gew.-Tln., vorzugsweise 90 - 30
      Gew.-Tln. OH-funktioneller Copolymerisatharze,
      welche pro Molekül mindestens zwei funktionelle
      OH-Gruppen enthalten, hergestellt durch Copolymerisation aus

      a)    0 - 26,5 Gew.-Tln. mindestens eines ungesättigten aromatischen Monomeren wie
            Styrol, Vinyltoluol und/oder Methacrylsäureester mit aliphatischen
            Kohlenwasserstoffresten der Ketten-
            länge $C_1$ bis $C_6$,

      b)    40 - 65 Gew.-Tln. mindestens eines aliphatischen Acrylsäureesters mit 1 - 12
            C-Atomen in der Alkoholkomponente,

      c)    25 - 40 Gew.-Tln. mindestens eines Hydroxyalkylesters der Acrylsäure mit 2 - 8
            C-Atomen im Hydroxyalkylrest,

      d)    0 - 50 Gew.-Tln. mindestens eines Acryl- bzw.
            Methacrylsäureglycidylesters bzw. de-
            ren Umsetzungsprodukten mit alipha-
            tischen und/oder aromatischen Mono-
            carbonsäuren und Aminoverbindungen,

Le A 23 915

e)    0 - 40    Gew.-Tln. eines Acrylsäure- bzw.
Methacrylsäureamides mit 1 - 20
C-Atomen im Amidorest,

f)    0 - 60    Gew.-Tle. Acrylnitril,

g)    0,05 - 5    Gew.-Tle. mindestens einer $\alpha$, $\beta$-mono-
olefinisch ungesättigten Mono- oder
Dicarbonsäure mit 3 - 7 C-Atomen
und/oder mindestens eines Maleinsäurehalbesters bzw. Fumarsäurehalbesters mit 2 - 14 C-Atomen im
Alkoholrest und

B)    1 - 90 Gew.-Tle., eines polyfunktionellen
Isocyanates,

wobei jeweils die Summe der Gew.-Tle. der Komponenten
A) und B) und die Summe der Gew.-Tle. der Komponenten
a) bis g) 100 beträgt.

2) Bindemittelkombination nach Anspruch 1, dadurch gekennzeichnet, daß das Polyacrylatharz A besteht aus

a)    0 - 26,5 Gew.-Tle. Styrol, Vinyltoluol, Methylmethacrylat, Butylmethacrylat oder
deren Mischungen,

b)    45 - 63    Gew.-Tle. Ethylacrylat, Butylacrylat,
2-Ethylhexylacrylat oder deren Mischungen,

Le A 23 915

c)   25 - 39   Gew.-Tle. 2-Hydroxyethylacrylat,
               2-Hydroxypropylacrylat, 4-Hydroxybutylacrylat oder deren Mischungen,

d)   0 - 30    Gew.-Tle. Glycidylacrylat, Glycidylmethacrylat oder deren Mischungen,
               gegebenenfalls nach Umsetzung mit
               gesättigten und/oder ungesättigten
               aliphatischen und/oder aromatischen
               Monocarbonsäuren, wobei die Umsetzung
               vor, oder nach der Copolymerisation,
               bei Temperaturen von 80- 160°C unter
               Verwendung üblicher Katalysatoren
               durchgeführt wird,

e)   0 - 30    Gew.-Tle. Methoxymethylacrylsäureamid
               bzw. Methoxymethylmethacrylsäureamid
               oder Mischungen derselben, wobei die
               alkoxylierten Monomeren gegebenenfalls
               copolymerisiert werden können, oder
               nach Copolymerisation von Acrylsäure-
               bzw. Methacrylsäureamid oder Mischungen derselben die Herstellung der
               alkoxylierten Verbindungen gegebenenfalls durch Umsetzung mit Formaldehyd
               in Gegenwart von Methanol vorgenommen
               werden kann,

Le A 23 915

f)   0 - 45   Gew.-Tle. Acrylnitril,

g)   0,5 - 4   Gew.-Tle. Acrylsäure, Methacrylsäure oder Maleinsäurehalbester mit 4 - 8 C-Atomen in der Alkoholkomponente oder deren Mischungen.

3.   Verwendung von Bindemittelkombinationen nach Anspruch 1 zur Beschichtung von Oberflächen.

4.   Verwendung von Bindemittelkombinationen nach Anspruch 1 zur Beschichtung von Kraftfahrzeugteilen.

5.   Kraftfahrzeugteile, beschichtet mit Bindemittelkombinationen nach Anspruch 1.

Le A 23 915